# EUROPÄISCHE PATENTANMELDUNG

(11) **EP 1 447 250 A2**
(43) Veröffentlichungstag der Anmeldung: **18.08.2004**
(21) Anmeldenummer: 03020388.9
(22) Anmeldetag: 10.09.2003
(51) Int. Cl.: B60H 3/06, B60H 1/00

(54) **Vorrichtung zur Aufnahme eines Filtereinsatzes**

(30) Priorität: 14.02.2003 DE 10307750
(71) Anmelder: Carl Freudenberg KG, 69469 Weinheim (DE)
(72) Erfinder: Schmitt, Daniel, Dr., Malabar NSW 2036 (AU)

(57) **Zusammenfassung**

Es wird eine Vorrichtung (1) zur Aufnahme eines sich aus wenigstens zwei, im Wesentlichen plattenförmigen Filterelementen (3, 4) zusammensetzenden Filtereinsatzes (2) beschrieben, welche seitliche Begrenzungswände (1a) und einen Boden (1 b) umfasst. Um eine einfache Montage und eine Verbesserung der Dichtigkeit beim Einsatz von Filtereinsätzen, die sich aus mehr als einem Filterelement zusammensetzen zu gewährleisten, ist erfindungsgemäß vorgesehen, dass der Boden (1b) terrassenartig abgestuft ist unter Ausbildung von zueinander höhenversetzt angeordneten Aufnahmeelementen (10, 11) für die einzelnen Filterelemente.

## Beschreibung

### Technisches Gebiet

Die Erfindung betrifft eine Vorrichtung zur Aufnahme eines sich aus wenigstens zwei im Wesentlichen plattenförmigen Filterelementen zusammensetzenden Filtereinsatzes, umfassend seitliche Begrenzungswände und einen Boden.

### Stand der Technik

Es ist bekannt, zur Filtration von Luft, beispielsweise in Kraftfahrzeugen, oder in Gebäude-Klimaanlagen, im Wesentlichen plattenförmige Filtereinsätze zu verwenden, die in entsprechenden Aufnahmen in einem Luftschacht angeordnet sind. Solche Filtereinsätze weisen in der Regel Filterelemente auf, die aus einem zick-zack-förmig gefalteten Filterwerkstoff, beispielsweise aus Papier oder Vliesstoff, bestehen. Als Aufnahmen dienen bei zahlreichen Kraftfahrzeugtypen sogenannte Filtergehäuse, die in den von der zu filtrierenden Luft durchströmten Luftschacht eingesetzt werden. Ebenso ist es üblich, den Fahrzeugrahmen selbst als Aufnahme für den Filtereinsatz auszubilden. Des weiteren kann der Filtereinsatz auch in ein Kraftfahrzeug-Klimagerät integriert werden. Wesentlich ist, dass die aus Filtereinsatz und Filtereinsatzaufnahme gebildeten Filteranordnungen gewisse Anforderungen hinsichtlich der Dichtigkeit erfüllen. Weiterhin müssen die Filtereinsätze in regelmäßigen Zeitabständen ausgewechselt werden, da mit zunehmender Belegung des Filterelements mit Staub die Filterleistung merklich nachlässt bzw. im Falle von Adsorptionsfiltern die Adsorptionskapazität erschöpft ist.

Es ist bekannt, in Einbauräumen mit komplexer Geometrie, beispielsweise in abgewinkelten Einbauräumen, Filtereinsätze zu verwenden, die sich aus mehreren plattenförmigen Filterelementen zusammensetzen. Hierbei werden die Filterelemente entsprechend der durch das Filtergehäuse bzw. die entsprechende Aufnahme im Fahrzeugrahmen vorgegebene Außenkontur nebeneinander angeordnet, derart, dass die zur Verfügung stehende Filterfläche vollständig bedeckt ist und sich die Seitenwandungen benachbarter Filterelemente anliegend berühren. Nachteilig an einer solchen Filteranordnung ist, dass Probleme hinsichtlich der Dichtigkeit auftreten können. So weisen beispielsweise die in der Klimaanlagentechnik und im Fahrzeugbau verwendeten Filterelemente aus Vliesstoff wesentlich höhere Fertigungstoleranzen auf als die entsprechenden Filtergehäusebeziehungsweise Rahmenkonstruktionen. Bei nebeneinander angeordneten Filterelementen addieren sich diese Fertigungstoleranzen auf, so dass diese zu einem Filtereinsatz zusammengesetzten Filterelemente nicht mehr passgenau zu der vorgegebenen Gehäuse- beziehungsweise Rahmenkonstruktion sind. Als Folge können sich Undichtigkeiten zwischen den Filterelementen und/oder zwischen den Filterelementen und der Filteraufnahme ergeben.

Ein weiterer Nachteil kann in dem erschwerten Einbau solcher sich aus mehreren Filterelementen zusammensetzenden Filtereinsätze bestehen, insbesondere in dem Fall, dass die Filterelemente durch eine in einer seitlichen Wandung des Luftschachts angeordnete Einschuböffnung in eine entsprechende Aufnahme einzuführen sind. Solche Aufnahmen sind nur sehr schwer zugänglich und die korrekte Ausrichtung, insbesondere der weiter innen im Luftschacht gelegenen Filterelemente beziehungsweise der Abdichtelemente an den Seitenwandungen dieser Filterelemente, ist kaum möglich.

### Darstellung der Erfindung

Aufgabe der Erfindung ist, eine Vorrichtung der eingangs genannten Art so weiterzuentwickeln, dass die beschriebenen Dichtigkeitsprobleme überwunden werden und darüber hinaus ein Auswechseln eines auch aus mehreren Filterelementen bestehenden Filtereinsatzes auch in engen Bauräumen leicht möglich ist.

Diese Aufgabe wird gelöst mit einer Aufnahmevorrichtung mit allen Merkmalen des Patentanspruchs 1. Eine Filteranordnung mit einer erfindungsgemäßen Aufnahmevorrichtung ist in Patentanspruch 4 beschrieben. Vorteilhafte Ausgestaltungen der Erfindung sind in den Unteransprüchen beschrieben.

Gemäß der Erfindung ist bei einer Vorrichtung zur Aufnahme eines sich aus wenigstens zwei im Wesentlichen plattenförmigen Filterelementen zusammensetzenden Filtereinsatzes, umfassend seitliche Begrenzungswände und einen Boden, vorgesehen, dass der Boden terrassenartig abgestuft ist, unter Ausbildung von zueinander höhenversetzt angeordneten Aufnahmeelementen für die einzelnen Filterelemente.

Bei der erfindungsgemäßen Aufnahmevorrichtung werden die Filterelemente somit gegeneinander höhenversetzt angeordnet. Die Abmessungen der stufenartig abgesenkten Bodenbereiche sind dabei jeweils so gewählt, dass sie passgenau zu den zugeordneten Filterelementen sind. Dadurch wird das Filtergehäuse bzw. die Aufnahme in einzelne Aufnahmeelemente unterteilt, wobei deren jeweilige seitlichen Begrenzungsflächen durch die Seitenwände des Gehäuses bzw. der Aufnahme sowie die senkrechten Stufenwände und die Seitenwandungen benachbarter höhergelegener Filterelemente gebildet werden.

Die terrassenartig abgestufte Ausbildung der erfindungsgemäßen Aufnahmevorrichtung hat den Vorteil, dass die Abdichtung zwischen aneinander angrenzend angeordneten Filterelementen nicht nur ausschließlich, so wie im Stand der Technik üblich, durch aneinander anliegende Seitenflächen der Filterelemente erfolgt. Jedes Filterelement dichtet zu einem benachbarten höhergelegenen Filterelement hin gegen die senkrechte Fläche der zwischen den beiden Ebenen befindlichen Stufe ab. Der Einfluss der Fertigungstoleranzen der Filterelemente wird dadurch minimiert.

Weiterhin erleichtern die durch die Stufenflächen gebildeten Anlageflächen für die Filterelemente die präzise Ausrichtung derselben in der Aufnahme und damit den Einbau. Dies spielt insbesondere bei nur schwer zugänglichen Einbauräumen eine wesentliche Rolle, beispielsweise bei solchen, bei denen die Filterelemente durch eine in einer Seitenwandung angeordnete spaltartige Einschuböffnung entweder hintereinander oder, bei abgewinkeltem Bauraum, gegeneinander versetzt hintereinander in das Gehäuse bzw. die Aufnahme eingeschoben werden müssen.

Bei einer solchen Variante erfolgt die terrassenartige Abstufung vorteilhafterweise von der Einschuböffnung ausgehend in Richtung auf das von der Einschuböffnung am weitesten entfernte Aufnahmeelement hin. Da die Höhe der Filterelemente in der Regel die Höhe der die Terrassen begrenzenden Stufen übersteigt, können die Filterelemente beim Einbau, z. B. beim Filterwechsel, in einfacher Weise nacheinander durch die spaltartige Einschuböffnung in die Aufnahmevorrichtung so weit eingeführt werden, bis sie an der hinteren Aufnahmewandung oder an der Wandung eines zuvor eingesetzten Filterelementes zur Anlage kommen und dann in die nach vorne hin durch die Stufe begrenzte Vertiefung eingedrückt werden.

Eine erfindungsgemäße Aufnahmevorrichtung weist besondere Vorteile bei Verwendung der in der Automobilindustrie in Luftfilter häufig eingesetzten Filterelemente mit sogenannter V-Laschendichtung auf. Solche Filterelemente sind beispielsweise in der DE 195 32 436 C1 beschrieben. Sie weisen in der Regel zumindest an zwei gegenüberliegenden Seitenwänden Dichtlaschen auf, die im nicht eingebauten Zustand jeweils im Wesentlichen V-förmig bis nahezu waagrecht von den Wandflächen nach außen abstehen. Beim Einbau in ein entsprechendes Gehäuse mit Ausrichtung der V-förmigen Öffnung entgegen der Strömungsrichtung legen sich die Dichtlaschen durch die Luftströmung angepresst dichtend an die Gehäusewandung an. Solche Filterelemente mit V-Laschendichtung können insbesondere bei der oben beschriebenen Ausführungsform für eine Aufnahmevorrichtung mit spaltartiger Einschuböffnung dadurch Schwierigkeiten bereiten, dass die ohne Anlagefläche wie oben beschrieben seitlich abstehenden Dichtlaschen sich beim Einschieben eines nachfolgenden Dichtelements diesem entgegenstellen können. Bei engem, unzugänglichem Bauraum ist ein nachträgliches Aufrichten der Dichtlaschen nicht möglich.

Bei einer erfindungsgemäßen Aufnahmevorrichtung werden diese Probleme dadurch überwunden, dass sich die dem nachfolgenden Dichtelement zugewandte Dichtlasche beim Eindrücken in die Vertiefung des entsprechenden Aufnahmeelements an der durch die Stufe gebildeten seitlichen Begrenzungsflächen automatisch aufrichtet und dadurch den Einbau des nachfolgenden Dichtelements nicht behindert. In gleicher Weise kann an der hinteren Begrenzungswand der Aufnahme eine Führungsschräge zum entsprechenden Aufrichten der rückwärtigen Dichtlasche vorgesehen sein.

Bei Verwendung von Filterelementen mit V-Dichtlaschen hat es sich weiterhin als vorteilhaft erwiesen, die V-Dichtlasche eines höhergelegenen Filterelements die obere Kante eines angrenzenden tiefergelegenen Filterelements übergreifen zu lassen. Mit diesen Maßnahmen lässt sich in einfacher Weise eine Höhenfixierung des tiefer gelegenen Filterelements erreichen. Ein weiterer Vorteil ist die doppelte Abdichtung, zum einen durch die sich unter elastischer Vorspannung dichtend an die Stufenwand und/oder die Plattenunterseite des höher gelegenen Filterelements anlegende Dichtlasche des tiefer gelegenen Filterelements und zum anderen durch die an der oberen Kante des unteren Filterelements anliegende Dichtlasche des oberen Filterelements.

Eine wirksame Höhenfixierung für das tiefer gelegene Filterelement lässt sich auch dadurch erreichen, dass das höher gelegene Filterelement das tiefer gelegene entlang der angrenzenden Längskante in einem schmalen Überlappungsbereich übergreift und die V-Lasche des tiefer gelegenen Filterelements so bemessen ist, dass sie sich passgenau an die Plattenunterseite des höher gelegenen Filterelements anlegt.

In einer weiteren bevorzugten Ausführungsform der Erfindung übergreift das höher gelegene Filterelement das tiefer gelegene wie oben beschrieben, wobei das tiefer gelegene Filterelement im Überlappungsbereich eine Aussparung aufweist, in welche das höher gelegene Filterelement mit seiner angrenzenden Bodenkante einsetzbar ist. Diese Anordnung bietet zusätzlich noch einen wirksamen Verdrehschutz für das tiefer gelegene Filterelement. Die Aussparung kann beispielsweise durch Ausstanzen des seitlichen Randstreifens des Filterelements und Kürzen der zugeordneten Dichtlasche realisiert werden. Ggf. kann der Überlappungsbereich noch zusätzlich durch Kürzen der Endfalte des Filterelements vergrößert werden. Fertigungstechnisch weniger aufwendig ist es, da auf die Ausbildung eine Aussparung verzichtet werden kann, wenn die Höhe des tiefer gelegene Filterelementes so bemessen ist, dass es insgesamt mit seiner Plattenoberseite unterhalb der Plattenunterseite des höher gelegenen Filterelements liegt, wobei das höher gelegene Filterelement das tiefer gelegene analog zur obigen Ausführungsform im Randbereich übergreift und mit seiner Bodenkante auf der Seitenkante des tiefer gelegenen Filterelements aufsitzt. Ein wirksamer Verdrehschutz wird dabei dadurch erzielt, dass die gegenüberliegende Seitenkante des tiefer gelegenen Filterelements höher als die an das höher gelegene Filterelement angrenzende Seitenkante ausgebildet ist.

Die vorliegende Erfindung und insbesondere auch die oben am Beispiel der V-Laschendichtung beschriebenen Ausführungsformen sind jedoch keineswegs auf die Verwendung von Filterelementen mit V-Laschendichtung beschränkt. Prinzipiell ist sie auf Filterelemente mit beliebigen Dichtmitteln wie z.B. Extrusionsprofile, Schäume, flexible Vliesstoffkanten, angespritzte Dichtlippen bei Spritzgussfiltern usw. anwendbar.

Ebenso wenig ist die vorliegende Erfindung auf einen bestimmten Filterwerkstoff beschränkt. Hier sind alle Filterwerkstoffe denkbar, u. a. auch Papier. Vorzugsweise kommt jedoch Vliesstoff zur Anwendung.

Die erfindungsgemäße Aufnahmevorrichtung kann sowohl als Gehäuse ausgebildet sein, als auch in den Fahrzeugrahmen eingeformt werden. Insbesondere kann sie auch in das Gehäuse einer Kraftfahrzeug- oder auch Gebäude-Klimaanlage integriert sein.

Eine Filteranordnung, die eine erfindungsgemäße Aufnahmevorrichtung sowie entsprechende Filterelemente umfaßt, findet bevorzugt als Luftfilter im Fahrzeugbau oder in der Klimaanlagentechnik Anwendung. Es sind jedoch auch andere beliebige Anwendungen denkbar.

### Kurzbeschreibung der Zeichnungen

Nachfolgend wird die Erfindung an Hand der Figuren näher erläutert.

Es zeigen:
- Fig. 1: In schematischer Darstellung in Draufsicht eine erfindungsgemäße Aufnahmevorrichtung mit zwei Filterelementen;
- Fig. 2: die Aufnahmevorrichtung aus Fig. 1 in seitlicher Schnittdarstellung;
- Fig. 3: in der gleichen Darstellungsweise wie in Fig. 2 eine zweite bevorzugte Ausführungsform der Erfindung;
- Fig. 4: in der gleichen Darstellungsweise wie in Fig. 2 eine dritte bevorzugte Ausführungsform der Erfindung;
- Fig. 5: in der gleichen Darstellungsweise wie in Fig. 2 eine vierte bevorzugte Ausführungsform der Erfindung;

### Ausführung der Erfindung

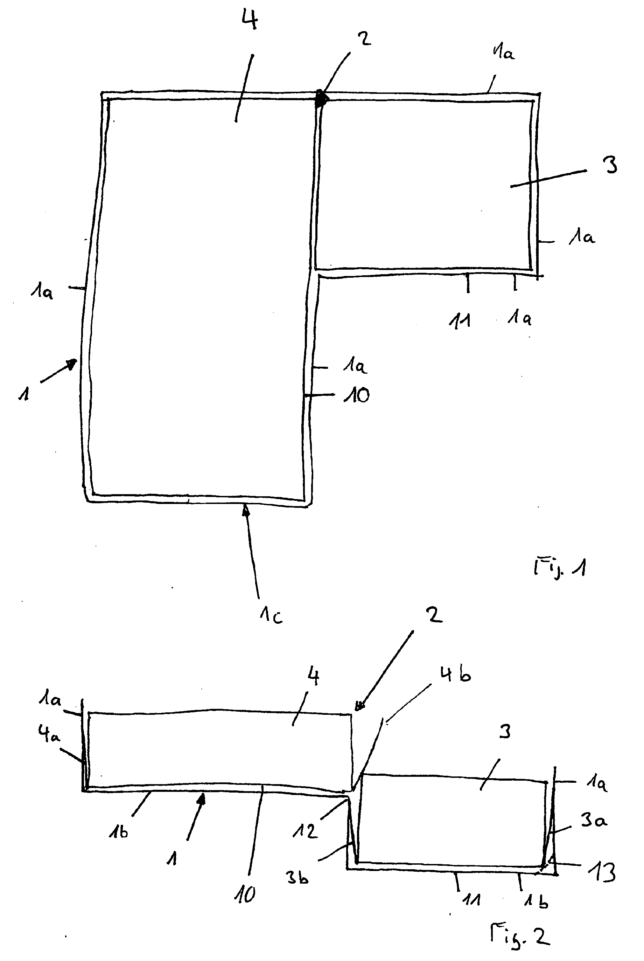

Man erkennt in Fig. 1 eine Aufnahmevorrichtung 1 für einen Filtereinsatz 2. Die Aufnahmevorrichtung 1 weist Seitenwände 1 a und einen Boden 1b auf. Sie umfasst im Wesentlichen zwei Aufnahmeelemente, ausgebildet als Kammern 10, 11, wobei die Kammer 11 im Winkel zur Kammer 10 angeordnet ist. Aufgrund dieser winkeligen Anordnung ist der Filtereinsatz 2 in zwei Filterelemente 3 und 4 unterteilt. Das Filterelement 3 befindet sich in der hinteren Kammer 11, das Filterelement 4 in der vorderen Kammer 10. Die dargestellte Vorrichtung weist weiterhin eine Einschuböffnung 1c auf, durch welche die Filterelemente 3 und 4 in die Kammern 10 und 11 eingeschoben werden. Zuerst wird das Filterelement 3 in die Kammer 11 eingeführt, dann das Filterelement 4 in die Kammer 10. Man erkennt an der Figur, dass ein nachträgliches Justieren der dem Filterelement 3 in die Kammer 10 hineinragenden Dichtungselementen beim Einführen des Filterelements 4 in die Kammer 10 kaum möglich ist. Sind beide Filterelemente 3 und 4 eingeschoben, wird die Einschuböffnung 1c verschlossen, beispielsweise mittels einer hier nicht dargestellten Klappe.

Um die genannten Schwierigkeiten beim Einbau der Filterelemente zu überwinden, ist, so wie in Fig. 2 dargestellt, erfindungsgemäß vorgesehen, dass der Boden 1b im Bereich der hinteren Kammer 11 unter Ausbildung einer Stufe 12 terrassenartig abgesenkt ist. Die Filterelemente 3 und 4 weisen in Fig. 2 jeweils an zwei einander gegenüberliegenden Seitenwänden Dichtlaschen 3a, 3b und 4a, 4b auf. Man erkennt, dass diese sich dichtend an die zugeordneten Wandungen anlegen. Insbesondere legt sich die Dichtlasche 3b des Filterelements 3 dichtend an der Bodenstufe 12 an. Gemäß einer bevorzugten Ausführungsform der Erfindung übergreift die Dichtlasche 4b teilweise den Randbereich des Filterelements 3a und fixiert dieses damit bezüglich der Höhe. Des Weiteren führt das Anlegen der Dichtlasche 4b an die Seitenkante des Filterelements 3 zu einer weiteren Abdichtung.

In Fig. 3 überragt das höher gelegene Filterelement 4 in einem Randbereich das tiefer gelegene Filterelement 3. Die Dichtlasche 3b des tiefer gelegenen Filterelements 3 ist so bemessen, dass sie sich passgenau an den Boden des höher gelegenen Filterelements 4 im überstehenden Randbereich anlegt. Hierdurch wird eine weitere Höhenfixierung des Filterelements 3 erzielt.

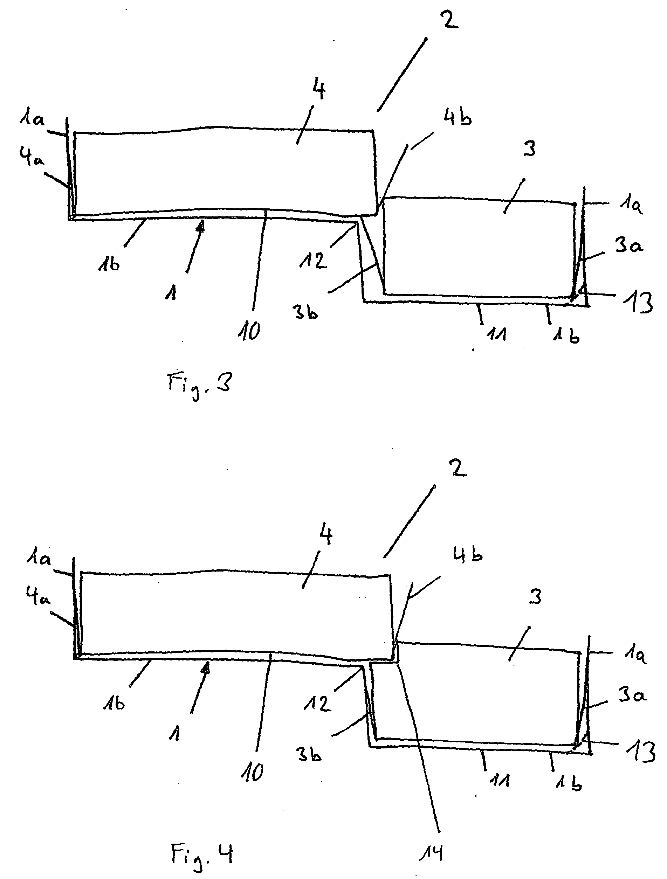

In Fig. 4 übergreift das höher gelegene Filterelement 4 das tiefer gelegene 3 wie oben beschrieben, wobei das tiefer gelegene Filterelement 3 im Überlappungsbereich eine Aussparung 14 aufweist, in welche das höher gelegene Filterelement 4 mit seiner angrenzenden Bodenkante einsetzbar ist. Diese Anordnung bietet zusätzlich noch einen wirksamen Verdrehschutz für das tiefer gelegene Filterelement 3. Die Aussparung 14 kann beispielsweise durch Ausstanzen des seitlichen Randstreifens des Filterelements 3 und Kürzen der zugeordneten Dichtlasche 3b realisiert werden. Ggf. kann der Überlappungsbereich noch zusätzlich durch Kürzen der Endfalte des Filterelements 3 vergrößert werden.

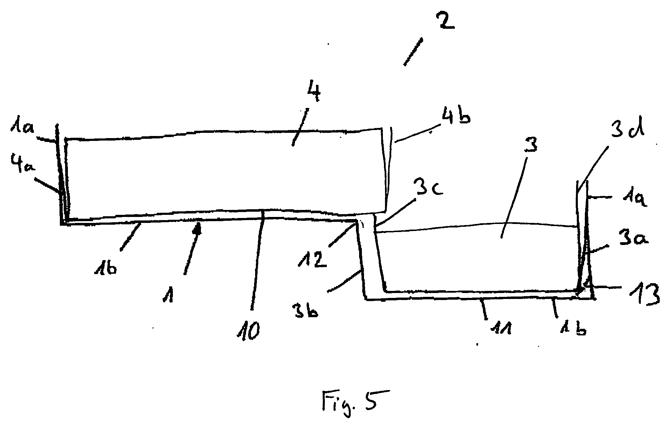

Alternativ dazu kann, wie in Fig.5 dargestellt, die Höhe des tiefer gelegenen Filterelements 3 so bemessen sein, dass es mit seiner Plattenoberseite insgesamt unterhalb der Plattenunterseite des höher gelegenen Filterelements 4 liegt, wobei das höher gelegene Filterelement 4 in einem Überlappungsbereich auf der Seitenkante 3c des tiefer gelegenen Filterelements 3 aufsitzt. Die Dichtlasche 4b des höher gelegenen Filterelements 4 liegt bei dieser Ausführungsform im Bereich der Einschuböffnung an der in der Figur nicht dargestellten Seitenwandung der Filteraufnahme1 an und wird dadurch am Aufklappen in Richtung auf das tiefer gelegene Filterelement 3 hin gehindert. Bei der dargestellten Ausführungsform ist die an die Gehäusewandung 1 a angrenzende Seitenkante 3d des tiefer gelegenen Filterelements 3 höher ausgebildet als die an das höher gelegene Filterelement 4 angrenzende. Auch mit dieser Maßnahme wird ein wirksamer Verdrehschutz erzielt.

Der Einbau der Filterelemente kann bei der dargestellten bevorzugten Ausführungsform der Erfindung in einfacher Weise so erfolgen, dass zuerst das Filterelement 3 durch die Einschuböffnung 1c in die vordere Kammer 10 der Aufnahmevorrichtung 1 eingeschoben wird. Sobald das Filterelement 3 die hintere Wandung der Aufnahmevorrichtung berührt, wird es nach rechts in die abgewinkelt angeordnete Kammer 11 eingeschoben und in den vertieften Bodenbereich eingedrückt. Dabei stellt sich die Dichtlasche 3b an der Seitenwand der Stufe 12 auf und legt sich an diese unter elastischer Vorspannung dichtend an. Um das Aufstellen der Dichtlasche 3b im hinteren Bereich der Kammer 11 ebenfalls zu begünstigen, kann im Bodenbereich der hinteren Kammer 11 eine Auflaufschräge 13 vorgesehen sein.

Die erfindungsgemäße Aufnahmevorrichtung ist in den Figuren ohne Beschränkung der Allgemeinheit als Aufnahmevorrichtung für zwei Filterelemente dargestellt. Es liegt jedoch auf der Hand, dass die erfindungsgemäße Aufnahmevorrichtung ebenso mehr als zwei, terrassenartig gegeneinander abgestufte Aufnahmeelemente für die Filterelemente aufweisen kann.

## Patentansprüche

1. Vorrichtung zur Aufnahme eines sich aus wenigstens zwei im Wesentlichen plattenförmigen Filterelementen zusammensetzenden Filtereinsatzes, umfassend seitliche Begrenzungswände und einen Boden, **dadurch gekennzeichnet, dass** der Boden (1b) terrassenartig abgestuft ist, unter Ausbildung von zueinander höhenversetzt angeordneten Aufnahmeelementen (10, 11) für die einzelnen Filterelemente (3, 4).

2. Vorrichtung nach Anspruch 1, **dadurch gekennzeichnet, dass** in einer der seitlichen Begrenzungswände (1a) eine spaltartige Einschuböffnung (1c) vorgesehen ist, durch welche die Filterelemente (3, 4) von der Seite her, senkrecht zur Durchflussrichtung durch den Filtereinsatz (2) in die Aufnahmevorrichtung (1) einführbar sind.

3. Vorrichtung nach Anspruch 2, **dadurch gekennzeichnet, dass** die terrassenartige Abstufung von der spaltartigen Einschuböffnung (1c) ausgehend in Richtung auf das von der Einschuböffnung am weitesten entfernt angeordnete Aufnahmeelement (11) hin erfolgt.

4. Filteranordnung, insbesondere zum Filtrieren von Frischluft für den Fahrgastraum eines Kraftfahrzeugs, umfassend einen sich aus wenigstens zwei im Wesentlichen plattenförmigen Filterelementen zusammensetzenden Filtereinsatz (2) und eine Vorrichtung (1) zur Aufnahme des Filtereinsatzes (2) nach einem der Ansprüche 1 bis 3.

5. Filteranordnung nach Anspruch 4, **dadurch gekennzeichnet, dass** die Filterelemente (3, 4) des Filtereinsatzes (2) wenigstens an jeweils zwei einander gegenüberliegenden Seitenwänden mit V-Laschendichtungen (3a, 3b, 4a, 4b) versehen sind.

6. Filteranordnung nach Anspruch 5, **dadurch gekennzeichnet, dass** die V-Dichtlasche (4b) des höher gelegenen Filterelements 4 des Filtereinsatzes (2) den Randbereich des angrenzenden tiefer gelegenen Filterelements (3) teilweise übergreift.

7. Filteranordnung nach einem der Ansprüche 1 bis 6, **dadurch gekennzeichnet, dass** das höher gelegene Filterelement (4) das tiefer gelegene Filterelement (3) in einem Randbereich überragt und die V-Dichtlasche (3b) des tiefer gelegenen Filterelements (3) so bemessen ist, dass sie sich passgenau an den Boden des Filterelements (4) im Überlappungsbereich anlegt.

8. Filteranordnung nach einem der Ansprüche 1 bis 7, **dadurch gekennzeichnet, dass** das höher gelegene Filterelement (4) das tiefer gelegene Filterelement (3) in einem Randbereich überragt und das tiefer gelegene Filterelement (3) im Überlappungsbereich eine Aussparung (14) aufweist, in welche das höher gelegene Filterelement mit seiner Bodenkante einsetzbar ist.

9. Filteranordnung nach einem der Ansprüche 1 bis 8, **dadurch gekennzeichnet, dass** das höher gelegene Filterelement (4) das tiefer gelegene Filterelement (3) in einem Randbereich überragt und in einem Überlappungsbereich auf dessen Seitenkante (3c) aufsetzt und dass die gegenüberliegende Seitenkante (3d) des tiefer gelegenen Filterelements (3) höher als die an das Filterelement (4) angrenzende ausgebildet ist.
